# EUROPEAN PATENT APPLICATION

(11) **EP 4 549 220 A1**
(43) Date of publication of application: **07.05.2025**
(21) Application number: 24204266.1
(22) Date of filing: 02.10.2024
(51) Int. Cl.: B60L 3/00, B60L 3/04, B60L 53/16, H01R 13/53

(54) **CHARGING COMPONENT AND CHARGING DEVICE**

(30) Priority: 23.10.2023 CN 202322843819 U
(71) Applicant: Huawei Digital Power Technologies Co., Ltd., Futian District, Shenzhen, Guangdong 518043 (CN)
(72) Inventor: LI, Pengyun, Shenzhen, 518043 (CN)
(74) Representative: Epping - Hermann - Fischer

(57) **Abstract**

This application provides a charging component and a charging device. The charging component includes a housing and a plurality of charging terminals The housing encloses a first accommodation cavity and a second accommodation cavity, and the first accommodation cavity is insulated from the second accommodation cavity The housing corresponding to the first accommodation cavity is provided with at least one first port, and the housing corresponding to the second accommodation cavity is provided with at least one second port. Each of the plurality of charging terminals includes a cable connection termination and a plug in/out termination. Cable connection terminations of some of the plurality of charging terminals are disposed in the first accommodation cavity, and plug in/out terminations of the some charging terminals are exposed to the housing through first ports; and cable connection terminations of the other of the plurality of charging terminals are disposed in the second accommodation cavity, and plug in/out terminations of the other charging terminals are exposed to the housing through second ports. The plurality of charging terminals are sealed in different cavities, to improve security protection performance of the charging component, and further improve security of the charging component.

## Description

### TECHNICAL FIELD

This application relates to the field of new energy devices, and specifically, to a charging component and a charging device.

### BACKGROUND

With development of new energy electric vehicles, security protection of charging components is increasingly improved. A charging component, for example, a charging connector, a vehicle socket, a power supply plug, or a power supply socket, usually includes a charging terminal, for example, a power terminal, a communication terminal, a charging connection confirmation terminal, a ground terminal, and an auxiliary power supply terminal. The power terminal is a high-voltage terminal, and the communication terminal, the charging connection confirmation terminal, the auxiliary power supply terminal, and the like are low-voltage terminals. In existing security protection, the high-voltage terminal and the low-voltage terminal are sealed in same protection space for protection. There are a large quantity of terminals. For example, an international direct current port has nine pins, in which two pins are the power terminals, and seven pins are the communication terminals, the charging connection confirmation terminals, the auxiliary power supply terminals, and the ground terminal. If one of the terminals leaks, security protection of the entire charging connector fails. Therefore, protection performance of an existing charging component for a new energy vehicle needs to be further enhanced, to improve security of the charging component.

### UTILITY MODEL CONTENT

This application provides a charging component and a charging device, to improve security protection performance of the charging component, and further improve security of the charging component.

According to a first aspect, this application provides a charging component. The charging component includes a housing and a plurality of charging terminals. The housing encloses a first accommodation cavity and a second accommodation cavity, and the first accommodation cavity is insulated from the second accommodation cavity The housing corresponding to the first accommodation cavity is provided with at least one first port, and the housing corresponding to the second accommodation cavity is provided with at least one second port. Each of the plurality of charging terminals includes a cable connection termination and a plug in/out termination, the cable connection termination is configured to connect to a cable, and the plug in/out termination is configured to connect to another component in a pluggable manner. Cable connection terminations of some of the plurality of charging terminals are disposed in the first accommodation cavity, and plug in/out terminations of the some charging terminals are exposed to the housing through first ports; cable connection terminations of the other of the plurality of charging terminals are disposed in the second accommodation cavity, and plug in/out terminations of the other charging terminals are exposed to the housing through second ports.

In the charging component in this application, a packaging area in the housing is divided into at least two accommodation cavities, namely, the first accommodation cavity and the second accommodation cavity. The some charging terminals are disposed in the first accommodation cavity, and the other charging terminals are disposed in the second accommodation cavity Separate packaging between the plurality of charging terminals is implemented by using the first accommodation cavity and the second accommodation cavity that do not communicate with each other, so that independent protection of different charging terminals can be implemented. When protection of the charging terminals located in the first accommodation cavity fails, the charging terminals located in the second accommodation cavity may not be affected. Alternatively, when protection of the charging terminals located in the second accommodation cavity fails, the charging terminals located in the first accommodation cavity may not be affected. In an optional implementation, the some charging terminals include a power terminal, and the other charging terminals include a communication terminal, an auxiliary power supply terminal, a charging connection confirmation terminal, and a ground terminal; or the some charging terminals include a power terminal, and the other charging terminals include a communication terminal, a charging connection confirmation terminal, and a ground terminal. The power terminal serving as a high-voltage terminal is disposed in the first accommodation cavity, and the remaining communication terminal, auxiliary power supply terminal, charging connection confirmation terminal, and ground terminal are located in the second accommodation cavity. Separate packaging between the power terminal and the communication terminal, the auxiliary power supply terminal, the charging connection confirmation terminal, and the ground terminal is implemented by using the first accommodation cavity and the second accommodation cavity that do not communicate with each other, so that independent protection of two components can be implemented. When protection of the communication terminal, auxiliary power supply terminal, charging connection confirmation terminal, and ground terminal fails, the power terminal is not affected.

In an optional implementation, a spacer plate is provided between the first accommodation cavity and the second accommodation cavity. The spacer plate has strong insulation, to improve sealing performance of the first accommodation cavity, and help isolate self-discharge of the power terminal. This avoids impact of a discharge current of the power terminal on the communication terminal and the like.

In an optional implementation, the second accommodation cavity is disposed around the first accommodation cavity, the spacer plate is an annular spacer plate, the first accommodation cavity is located in an enclosed area of the annular spacer plate, and the second accommodation cavity is located between the annular spacer plate and a side wall of the housing. In the structure, the first accommodation cavity is an annular accommodation cavity, and is formed through separation by using the annular spacer plate, so that the accommodation cavity with better sealing performance can be formed.

In an optional implementation, the housing includes a first housing and a second housing, and the first housing is provided with a first annular side wall. The second housing is provided with an end cover and a second annular side wall. The second annular side wall is continuously disposed along a circumferential direction of the end cover, and is connected to the end cover in a sealed manner. The second housing is provided with the annular spacer plate, one end of the annular spacer plate is connected to the end cover in a sealed manner, a packaging cover is provided at the other end of the annular spacer plate, and the second annular side wall is connected to the first annular side wall in a sealed manner. Space enclosed by the end cover, the annular spacer plate, and the packaging cover forms the first accommodation cavity, and remaining space other than the first accommodation cavity enclosed by the first housing and the second housing forms the second accommodation cavity.

In an optional implementation, the first port and the second port are disposed on the end cover. The first port and the second port are disposed on the end cover, and therefore can be conveniently connected.

In an optional implementation, the first accommodation cavity and the second accommodation cavity are disposed side by side, and two ends of the spacer plate are separately connected to an inner wall of the housing.

In an optional implementation, the second accommodation cavity includes a plurality of accommodation cavities, and the plurality of accommodation cavities are insulated from each other. The plurality of accommodation cavities are separately disposed on two sides of the first accommodation cavity. In the packaging structure, the communication terminal, the ground terminal, and the charging terminal are separately disposed, and may be separately disposed in different sub-cavities.

In an optional implementation, the charging component is a charging connector, a vehicle socket, a power supply plug, or a power supply socket.

According to a second aspect, this application provides a charging device, including a charging pile and the charging component in this application, where the charging component is electrically connected to the charging pile.

For technical effects that can be achieved in the second aspect, refer to corresponding effect descriptions in the first aspect. Details are not described herein again.

### BRIEF DESCRIPTION OF DRAWINGS

FIG. 1 is a diagram of a structure of a charging device for charging an electric vehicle;
FIG. 2 is a diagram of a structure of a power distribution system of a charging device according to an embodiment;
FIG. 3 is a diagram of a structure of an end face of a charging connector;
FIG. 4 is a diagram of a structure of a charging connector according to an embodiment;
FIG. 5 is a diagram of an exploded structure of a charging connector;
FIG. 6 is a diagram of an exploded structure of a charging connector head according to an embodiment; and
FIG. 7 is a diagram of a structure of disposition of a spacer plate according to another embodiment.

Reference numerals: 10-charging connector; 1-housing; 101-first housing; 1011-first annular side wall; 102-second housing; 1021-second annular side wall; 1022-end cover; 103-spacer plate (annular spacer plate); 104-first port; 105-second port; 10a-first accommodation cavity; 10b-second accommodation cavity; 01-charging terminal; 11-power terminal; 110-plug in/out termination of the power terminal; 111-cable connection termination; 12-communication terminal; 120-plug in/out termination of the communication terminal; 13-ground terminal; 130-plug in/out termination of the ground terminal; 14-auxiliary power supply terminal; 140-plug in/out termination of the auxiliary power supply terminal; 15-charging connection confirmation terminal; 150-plug in/out termination of the charging connection confirmation terminal; 16-packaging plate; 20-charging pile; 21-outer housing; 22-power distribution unit; 221-power distribution module; 222-power module; 23-control unit; and 30-cable.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a", "the foregoing", "the", and "the one" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and variants thereof all mean "include but are not limited to", unless otherwise specifically emphasized in another manner.

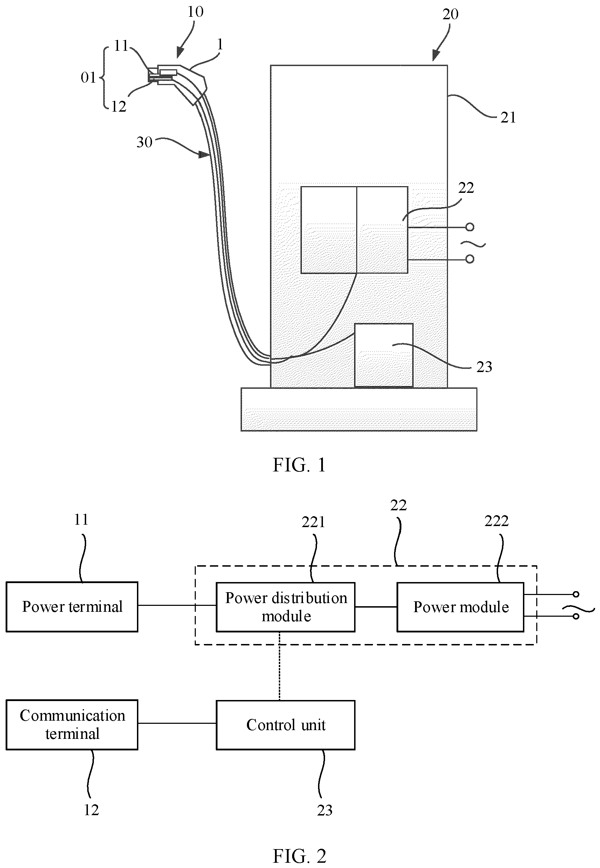

An electric vehicle may be charged by using a charging device, to obtain electric energy. FIG. 1 is a diagram of a structure of the charging device for charging the electric vehicle. As shown in FIG. 1, the charging device may specifically include a charging connector 10, a charging pile 20, and a cable 30 connected between the charging connector 10 and the charging pile 20. The charging pile 20 includes an outer housing 21 and a power distribution system disposed in the outer housing 21. The power distribution system includes a power distribution unit 22 and a control unit 23. The power distribution unit 22 is configured to: perform power conversion on electric energy input by an external power supply, and provide electric energy for the charging connector 10. The charging connector 10 specifically includes a housing 1 and a charging terminal 01 disposed in the housing 1. The charging terminal 01 may include, for example, a power terminal 11 and a communication terminal 12. Each charging terminal in the charging connector 10 may include a cable connection termination and a plug in/out termination. The cable connection termination is configured to connect to the cable 30, and the plug in/out termination is configured to connect to another component, for example, a charged vehicle. The cable 30 includes a power cable for current transmission and a communication cable for signal transmission. Specifically, the communication cable in the cable 30 is configured to connect the communication terminal 12 to the control unit 23 to implement communication, and the power cable in the cable 30 is configured to connect the power terminal 11 to the power distribution unit 22 to implement current transmission.

FIG. 2 is a diagram of a structure of a power distribution system of a charging device according to an embodiment. As shown in FIG. 2, the power distribution unit 22 includes a power distribution module 221 and a power module 222, and the power module 222 is configured to connect to an external power supply. As shown in FIG. 1 and FIG. 2, the power distribution module 221 is electrically connected to the power module 222, and the power distribution module 221 is connected to the power terminal 11 through the power cable in the cable 30. When the electric vehicle is charged, the power module 222 may convert an alternating current into a direct current, and provide electric energy for the power terminal 11 through the power distribution module 221. The control unit 23 is electrically connected to the communication terminal 12, the control unit 23 is in a signal connection to the power distribution module 221 in the power distribution unit 22, and the control unit 23 may control, based on a status of a signal connection between the communication terminal 12 and the electric vehicle, the power distribution module 221 to supply power to the power terminal 11.

The charging connector 10 is configured to connect to a vehicle socket of the electric vehicle, to charge the electric vehicle by transmitting electric energy between the charging connector and the vehicle socket. To prevent water vapor from entering the charging connector and causing damage to the charging connector 10, the charging connector 10 is usually sealed and packaged, to improve a charging ingress protection (ingress protection, IP) rating, and further implement waterproof, vapor-proof, and dustproof functions.

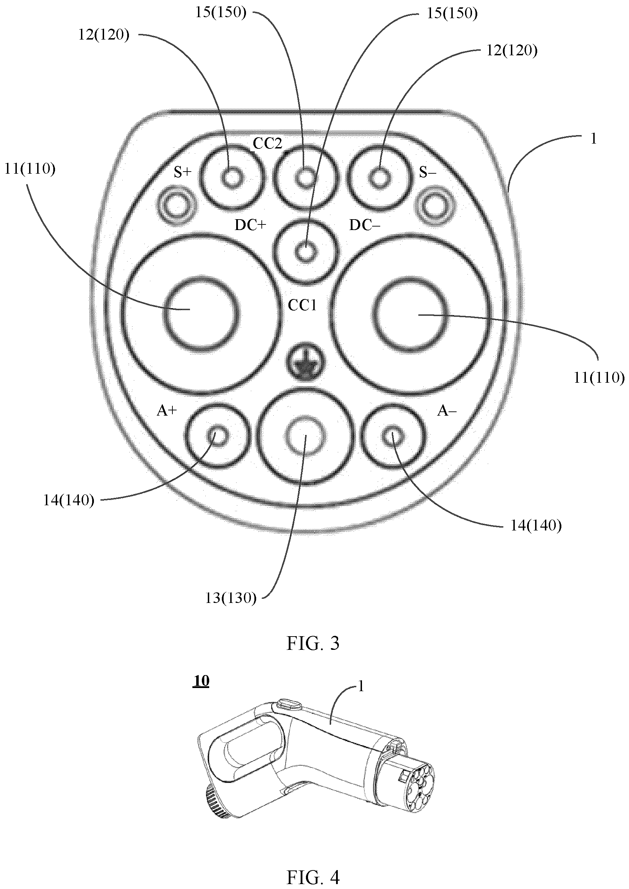

FIG. 3 is a diagram of a structure of an end face of a charging connector. As shown in FIG. 3, in addition to the power terminal 11 and the communication terminal 12 (S+/S- in FIG. 3), the charging terminal 01 may further include a charging connection confirmation terminal 15 (CC1/CC2 in FIG. 3), a ground terminal 13, and an auxiliary power supply terminal 14. The charging connection confirmation terminal 15 (CC1/CC2) is connected to a charging connection confirmation circuit. After the charging connector is connected to the electric vehicle, the charging pile determines a status of a connection between the charging connector and the electric vehicle by detecting a voltage of a detection point in the charging connection confirmation circuit. The ground terminal 13 is used for a grounding connection. The auxiliary power supply terminal 14 is a low-voltage charging terminal, and is configured to supply power to a low-voltage device of the vehicle. For example, the auxiliary power supply terminal 14 may provide an auxiliary power supply for a vehicle-end battery control system. In the terminals of the charging connector 10, the power terminal 11 is a high-voltage terminal whose operating voltage is usually 1000 V to 1600 V. However, the communication terminal 12, the charging connection confirmation terminal 15, and the auxiliary power supply terminal 14 each are a low-voltage terminal whose operating voltage is usually 30 V.

As shown in FIG. 3, in an arrangement manner of the charging connector, the communication terminal 12 and the charging connection confirmation terminal 15 may be disposed on one side of the power terminal 11, and the ground terminal 13 and the auxiliary power supply terminal 14 may be disposed on another side of the power terminal 11. The power terminal 11, the communication terminal 12, the charging connection confirmation terminal 15, the ground terminal 13, and the auxiliary power supply terminal 14 may be packaged by using the housing.

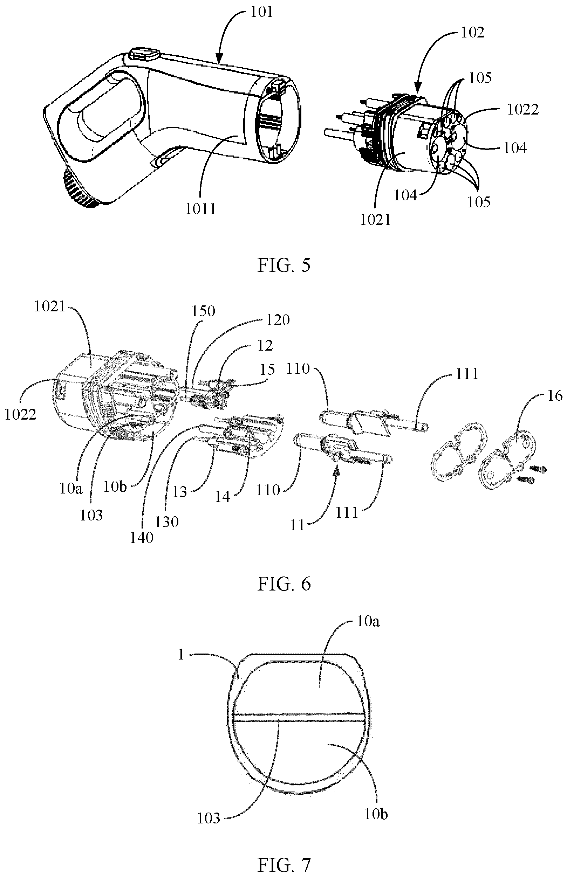

FIG. 4 is a diagram of a structure of the charging connector according to an embodiment. FIG. 5 is a diagram of an exploded structure of the charging connector. As shown in FIG. 4 and FIG. 5, the charging connector may include a charging connector handle and a charging connector head. The housing 1 of the charging connector may be of a detachable structure, and may include a first housing 101 and a second housing 102.

As shown in FIG. 5, the first housing 101 may be an outer housing of the charging connector handle, is of a hollow structure, and has a shape that is easy to hold. The first housing 101 has a first annular side wall 1011, and the first annular side wall 1011 is an insulation side wall. A first opening is provided at one end of the first annular side wall 1011, and is configured to communicate with the second housing 102.

As shown in FIG. 5, the second housing 102 may be an outer housing of the charging connector head, and is of a hollow structure. One end of the second housing 102 is connected to the first housing 101, and the other end of the second housing 102 is configured to connect to the vehicle socket. The second housing 102 includes a second annular side wall 1021 and an end cover 1022. The second annular side wall 1021 is disposed along a circumferential direction of the end cover 1022. The second annular side wall 1021 may be connected to the first annular side wall 1011, for example, may be connected to the first annular side wall 1011 through a screw thread. After the second annular side wall 1021 is connected to the first annular side wall 1011, the first housing 101 and the second housing 102 are assembled in a fastening manner.

FIG. 6 is a diagram of an exploded structure of the charging connector head according to an embodiment. As shown in FIG. 6, a spacer plate 103, for example, an annular spacer plate 103, is provided in space enclosed by the second annular side wall 1021 and the end cover 1022. In this embodiment of this application, the annular spacer plate 103 may be an annular spacer plate that is of an approximately elliptic shape. One end of the annular spacer plate 103 is connected to the end cover 1022 in a sealed manner, and a packaging plate 16 is provided at the other end of the annular spacer plate 103.

As shown in FIG. 4 to FIG. 6, after the first housing 101 is fastened to the second housing 102, accommodation space between the first housing 101 and the second housing 102 may be divided into a first accommodation cavity 10a and a second accommodation cavity 10b. An area enclosed by the packaging plate 16, the annular spacer plate 103, and the end cover 1022 forms the first accommodation cavity 10a. Remaining space other than the first accommodation cavity 10a enclosed by the first housing 101 and the second housing 102 forms the second accommodation cavity 10b. In this way, the annular spacer plate 103 may divide the accommodation space between the first housing 101 and the second housing 102 into the first accommodation cavity 10a and the second accommodation cavity 10b, and the second accommodation cavity 10b is disposed around the first accommodation cavity 10a. The first accommodation cavity 10a is located in an enclosed area of the annular spacer plate 103, and the second accommodation cavity 10b is located between the annular spacer plate 103 and the side walls of the first housing 101 and the second housing 102.

As shown in FIG. 5 and FIG. 6, the power terminal 11 is disposed in the first accommodation cavity 10a. A first port 104 is provided on the end cover 1022 corresponding to the first accommodation cavity 10a. The power terminal 11 includes a cable connection termination 111 and a plug in/out termination 110. The cable connection termination 111 of the power terminal is disposed in the first accommodation cavity 10a, and is configured to connect to a cable. The plug in/out termination 110 of the power terminal is exposed to the first port 104, and is configured to connect to a charging socket of the electric vehicle in a pluggable manner. The packaging plate 16 may be provided with a through hole, and the through hole is configured to implement a connection between the cable connection termination 111 of the power terminal and the cable. The plug in/out termination 110 of the power terminal may be disposed on an inner side of the first port 104, and a part of a surface of the plug in/out termination 110 is exposed from the first port 104, to be electrically connected to an external component. Alternatively, the plug in/out termination 110 of the power terminal may extend out of the first accommodation cavity 10a from the first port 104, to be electrically connected to an external component. The plug in/out terminations 110 of the power terminals and the first ports 104 are disposed in a one-to-one correspondence. At the first port 104, sealing needs to be performed between the plug in/out termination 110 of the power terminal and the housing, to ensure that sealing performance of the first accommodation cavity meets an IP protection requirement. During specific disposition, for example, a sealing piece like a sealing ring may be used to seal the plug in/out termination of the power terminal to the first port 104, to implement a sealing connection between the power terminal 11 and the first port 104, and further implement IP protection of the power terminal 11 located in the first accommodation cavity 10a.

The power terminal 11 may be divided into a positive power terminal and a negative power terminal. There may be two plug in/out terminations of the power terminal, namely, one positive plug in/out termination and one negative plug in/out termination. An insulation plate may be disposed between the positive plug in/out termination and the negative plug in/out termination. The insulation plate divides space in the first accommodation cavity into two sub-cavities. The plug in/out terminations of the power terminals and the first ports are disposed in a one-to-one correspondence.

As shown in FIG. 5 and FIG. 6, the communication terminal 12, the charging connection confirmation terminal 15, the ground terminal 13, and the auxiliary power supply terminal 14 of the charging terminal are disposed in the second accommodation cavity 10b. The communication terminal 12, the charging connection confirmation terminal 15, the ground terminal 13, and the auxiliary power supply terminal 14 each include a cable connection termination and a plug in/out termination. The communication terminal 12, the charging connection confirmation terminal 15, the ground terminal 13, and the auxiliary power supply terminal 14 each include the cable connection termination that is disposed in the second accommodation cavity 10b and that is configured to connect to a cable. A second port 105 is provided on the end cover 1022 corresponding to the second accommodation cavity 10b. Each of plug in/out terminations of the communication terminal 12, the charging connection confirmation terminal 15, the ground terminal 13, and the auxiliary power supply terminal 14 is disposed corresponding to one second port 105. Each of the plug in/out terminations of the communication terminal 12, the charging connection confirmation terminal 15, the ground terminal 13, and the auxiliary power supply terminal 14 may be disposed on an inner side of the second port 105, and a part of a surface of the plug in/out termination is exposed from the second port 105 to be electrically connected to an external component, or each plug in/out termination may extend from the second port 105. The plug in/out terminations of the charging terminals and the second ports 105 are disposed in a one-to-one correspondence. For example, each of the plug in/out terminations of the communication terminal 12, the charging connection confirmation terminal 15, the ground terminal 13, and the auxiliary power supply terminal 14 may be exposed to the housing from one second port 105.

Still as shown in FIG. 5 and FIG. 6, in an embodiment, a plug in/out termination 120 of the communication terminal extends out of the second accommodation cavity 10b through the second port 105 corresponding to the plug in/out termination 120, so that the plug in/out termination can be connected to the charging socket of the electric vehicle. During specific disposition, the communication terminal 12 is connected to the second port 105 in a sealed manner, to implement IP protection of the communication terminal 12 located in the second accommodation cavity 10b. A plug in/out termination 150 of the charging connection confirmation terminal extends out of the second accommodation cavity 10b through the second port 105 corresponding to the plug in/out termination 150, so that the plug in/out termination can be connected to the charging socket of the electric vehicle. During specific disposition, the charging connection confirmation terminal 15 is connected to the second port 105 in a sealed manner, to implement IP protection of the charging connection confirmation terminal 15 located in the second accommodation cavity 10b. A plug in/out termination 130 of the ground terminal extends out of the second accommodation cavity 10b through the second port 105, so that the plug in/out termination can be connected to the charging socket of the electric vehicle. During specific disposition, the ground terminal 13 is connected to the second port 105 in a sealed manner, to implement IP protection of the ground terminal 13 located in the second accommodation cavity 10b. In addition, a plug in/out termination 140 of the auxiliary power supply terminal extends out of the second accommodation cavity 10b through the second port 105, so that the plug in/out termination can be connected to the charging socket of the electric vehicle. During specific disposition, the auxiliary power supply terminal 14 is connected to the second port 105 in a sealed manner, to implement IP protection of the auxiliary power supply terminal 14 located in the second accommodation cavity 10b. During sealing, because the power terminal is a high-voltage terminal and has a high protection requirement, a sealing level of the first accommodation cavity 10a may be higher than a sealing level of the second accommodation cavity 10b. For example, a sealing performance of the first accommodation cavity 10a may meet an IP67 protection requirement. A sealing level of the second accommodation cavity 10b may be the same as a sealing level of the first accommodation cavity 10a, or may be slightly lower than a sealing level of the first accommodation cavity 10a, provided that a sealing level of a conventional component is met, for example, an IP54 protection requirement may be met.

FIG. 7 is a diagram of a structure of disposition of the spacer plate according to another embodiment. As shown in FIG. 7, the spacer plate 103 is a flat plate structure. Two opposite side faces of the spacer plate 103 are separately connected to the inner wall of the housing 1. A plate surface extension direction of the spacer plate 103 may be perpendicular to a plate surface direction of the end cover, to divide the accommodation space in the housing 1 into the first accommodation cavity 10a and the second accommodation cavity 10b that are disposed side by side.

The second accommodation cavity may also be divided into a plurality of accommodation cavities that do not communicate with each other, and the communication terminal, the charging connection confirmation terminal, the ground terminal, and the auxiliary power supply terminal may be separately disposed in different accommodation cavities. The accommodation cavities may be separated by an insulation plate.

The housing may be made of a macromolecular polymer material with high insulation and high strength. The spacer plate and the housing may be integrally formed by using a same material, to ensure sealing performance between the spacer plate and the housing.

The foregoing describes a packaging structure of the power terminal, the communication terminal, the charging connection confirmation terminal, the ground terminal, and the auxiliary power supply terminal by using a structure of the charging connector as an example. Similarly, in the charging field, the vehicle socket used in cooperation with the charging connector may also be packaged in the foregoing separate sealing manner, to improve security of the charging device. In addition, when the charging connector is a removable charging connector, that is, when the charging connector is connected to the charging pile in a pluggable manner, a power supply plug may be disposed at one end of the charging connector that is configured to connect to the charging pile, and the charging pile is correspondingly provided with a power supply socket. After the power supply plug is plugged into the power supply socket, current conduction is implemented. Therefore, the structure of the charging connector in this application is also applicable to the power supply plug and the power supply socket.

An embodiment of this application further provides a charging device. The charging device may include a charging pile and the charging component in embodiments of this application, and the charging component is electrically connected to the charging pile.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging component, comprising:
a housing, wherein the housing encloses a first accommodation cavity and a second accommodation cavity, the first accommodation cavity is insulated from the second accommodation cavity, the housing corresponding to the first accommodation cavity is provided with at least one first port, and the housing corresponding to the second accommodation cavity is provided with at least one second port; and
a plurality of charging terminals, wherein each charging terminal comprises a cable connection termination and a plug in/out termination, the cable connection termination is configured to connect to a cable, and the plug in/out termination is configured to connect to another component in a pluggable manner; cable connection terminations of some of the plurality of charging terminals are disposed in the first accommodation cavity, and plug in/out terminations of the some charging terminals are exposed to the housing through the at least one first port; and cable connection terminations of the other of the plurality of charging terminals are disposed in the second accommodation cavity, and plug in/out terminations of the other charging terminals are exposed to the housing through the at least one second port.

2. The charging component according to claim 1, wherein the some charging terminals comprise a power terminal, and the other charging terminals comprise a communication terminal, an auxiliary power supply terminal, a charging connection confirmation terminal, and a ground terminal; or the some charging terminals comprise a power terminal, and the other charging terminals comprise a communication terminal, a charging connection confirmation terminal, and a ground terminal.

3. The charging component according to claim 2, wherein a spacer plate is provided between the first accommodation cavity and the second accommodation cavity.

4. The charging component according to claim 3, wherein the second accommodation cavity is disposed around the first accommodation cavity, the spacer plate is an annular spacer plate, the first accommodation cavity is located in an enclosed area of the annular spacer plate, and the second accommodation cavity is located between the annular spacer plate and a side wall of the housing.

5. The charging component according to claim 4, wherein the housing comprises a first housing and a second housing;
the first housing is provided with a first annular side wall;
the second housing is provided with an end cover and a second annular side wall, the second annular side wall is continuously disposed along a circumferential direction of the end cover, and is connected to the end cover in a sealed manner, the second housing is provided with the annular spacer plate, one end of the annular spacer plate is connected to the end cover in a sealed manner, a packaging cover is provided at the other end of the annular spacer plate, and the second annular side wall is connected to the first annular side wall in a sealed manner; and
space enclosed by the end cover, the annular spacer plate, and the packaging cover forms the first accommodation cavity, and remaining space other than the first accommodation cavity enclosed by the first housing and the second housing forms the second accommodation cavity.

6. The charging component according to claim 5, wherein the first port and the second port are disposed on the end cover.

7. The charging component according to claim 3, wherein the first accommodation cavity and the second accommodation cavity are disposed side by side, and two ends of the spacer plate are separately connected to an inner wall of the housing.

8. The charging component according to any one of claims 1 to 7, wherein the second accommodation cavity comprises a plurality of accommodation cavities, and the plurality of accommodation cavities are insulated from each other.

9. The charging component according to claim 8, wherein the plurality of accommodation cavities are separately disposed on two sides of the first accommodation cavity

10. A charging device, comprising a charging pile and the charging component according to any one of claims 1 to 9, wherein the charging component is electrically connected to the charging pile.
